# EUROPEAN PATENT APPLICATION

(11) **EP 3 575 645 A1**
(43) Date of publication of application: **04.12.2019**
(21) Application number: 18461564.9
(22) Date of filing: 01.06.2018
(51) Int. Cl.: F16K 1/44, F16K 27/02, F16K 31/06

(54) **DEVICE FOR PILOT VALVE**

(71) Applicant: Hamilton Sundstrand Corporation, Charlotte, NC 28217 (US)
(72) Inventor: KIELCZYKOWSKI, Przemyslaw, 56-300 Milicz (PL); SOBOLAK, Piotr, 76-200 Slupsk (PL)
(74) Representative: Dehns

(57) **Abstract**

A device (14) for selectively controlling the flow of hydraulic fluid through the pilot valve comprises a longitudinal axis and a housing (16), an internal cavity (18), at least one inlet passage (24), at least one outlet passage (26), a guide disposed in the internal cavity (18), a first seat disposed in the internal cavity (18), a second seat disposed in the internal cavity (18), a movable blocking member disposed in the guide cavity, and an actuator (72) configured to control the position of the movable blocking member.

## Description

### TECHNICAL FIELD

The present disclosure relates to valves, particularly pilot valves for hydraulic actuators, such as actuators for a ram air turbine ("RAT").

### BACKGROUND

Pilot valves are used to control hydraulic fluid flow to actuators. Pilot valves are often fitted with devices that selectively provide hydraulic pressure from the hydraulic system to the actuator, for example to move a spool of the actuator and stow/deploy a component connected to the actuator. The devices are commonly referred to as a "gland" and contain a number of valve components for providing the above functionality.

In particular in aerospace applications, for example ram air turbines, pilot valves are susceptible to foreign object debris (FOD) damage, from infiltration of debris into the gland of the pilot valve. This can necessitate more frequent maintenance of the pilot valve. In addition, glands of the pilot valve are also susceptible to damage on installation into the pilot valve. Damage to the gland can reduce the effectiveness of the valve.

It is desired to provide an improved pilot valve, in particular to provide improvements to the reliability and robustness of internal components thereof, for example the devices or "glands" that selectively provide hydraulic pressure from the hydraulic system to the actuator.

### SUMMARY

According to an aspect of the disclosure, there is a device for selectively controlling the flow of hydraulic fluid through the pilot valve, the device comprising a longitudinal axis and comprising: a housing comprising an exterior surface; an internal cavity defined at least partially by an interior surface of the housing; at least one inlet passage extending through the housing from the exterior surface to the internal cavity; and at least one outlet passage extending through the housing from the internal cavity to the exterior surface; a guide disposed in the internal cavity and defining a guide cavity therein, wherein the guide is provided as a substantially annular member having a body extending between an inner circumferential surface defining the guide cavity and an outer circumferential surface, wherein the guide comprises at least one fluid passage extending through the body from the inner circumferential surface to the outer circumferential surface, the fluid passage(s) providing fluid communication between the guide cavity and the outlet passage(s) of the device; a first seat disposed in the internal cavity axially between the inlet passage and the ball guide and defining a first seat passage therethrough to fluidly connect the inlet passage with the guide cavity; a second seat disposed in the internal cavity such that the guide is arranged axially between the first seat and the second seat, the second seat defining a second seat passage therethrough; a movable blocking member disposed in the guide cavity of the guide and axially moveable therein between a first position and a second position, wherein in the first position the movable blocking member substantially blocks and/or seals the first seat passage to prevent fluid from flowing through the first seat passage and into the guide cavity of the guide, and wherein in the second position the movable blocking member permits fluid to flow out of the device via the guide cavity, the fluid passage(s) of the guide and the outlet passage(s) of the device; and an actuator configured to control the position of the movable blocking member.

The use of fluid passages extending through the body of the guide has been found to improve the operation of the guide, for example lead to improved fluid flow and control of fluid through the guide. Further refinements are described below.

In an embodiment, the movable blocking member may be a ball; the first seat passage may comprise a fluid outlet with a radius at a side adjoining the guide cavity; the second seat passage may comprise an opening with a radius at a side adjoining the guide cavity; and the ball may have a radius greater than the radius of the fluid outlet and the radius of the opening. This means that the ball is able to efficiently block the opening and outlet.

In a further embodiment of any of the above, the guide cavity may be cylindrical and may have a substantially constant cross-section with a radius R. A cylindrical guide cavity allows the movable blocking member (especially in the case of a ball) to move easily through the guide cavity.

In a further embodiment of any of the above, the actuator may comprise a solenoid. This provides fast and efficient movement of the movable blocking member.

In a further embodiment of any of the above, the device may further comprise a retainer disposed in the internal cavity adjoining the second seat on an axially opposed side to the guide, wherein the retainer is press-fit in the internal cavity.

In a further embodiment of any of the above, the at least one outlet passage may comprise a plurality of outlet passages, to further improve the fluid flow through the device.

In a further embodiment of any of the above, the housing may have a substantially constant cross-section along the axis. This has been found to improve the construction of the device. In a further refinement, the device may be substantially cylindrical.

In a further embodiment of any of the above, the device may further comprise a screen filter, positioned in the internal cavity, wherein the screen filter is positioned between the first seat and the inlet passage of the device.

In a further embodiment of any of the above, the housing may be formed of steel or a steel alloy.

According to a further aspect of the disclosure, there is a pilot valve comprising: a chamber defined by a chamber wall; a valve inlet formed in the chamber wall; a valve outlet formed in the chamber wall; a device according to any of the above embodiments disposed in the chamber, the device configured to selectively control the flow of hydraulic fluid through the pilot valve.

In a further embodiment of any of the above, the pilot valve may further comprise a first seal sealingly engaged with the exterior surface and the chamber wall at a position axially between the valve inlet and the valve outlet.

In a further embodiment of any of the above, the pilot valve may further comprise a second seal sealingly engaged with the exterior surface and the chamber wall at an axially opposed side of the valve outlet to the first seal.

In a further embodiment of any of the above, the device may further comprise an annular cavity formed in the exterior surface and extending circumferentially around the device axially between the first seal and the second seal.

According to a further aspect of the disclosure, there is a ram air turbine comprising: an actuator; and the pilot valve according to any of the above embodiments, configured to control the actuator, wherein the device is configured to selectively provide hydraulic fluid from a source of hydraulic fluid to the actuator.

According to a further aspect of the disclosure, there is a method of repairing a pilot valve comprising: removing an existing device configured to selectively control the flow of hydraulic fluid through the pilot valve; and installing a device according to any of the above embodiments in the pilot valve.

### BRIEF DESCRIPTION OF THE DRAWINGS

Fig. 1 shows a pilot valve and device in accordance with an embodiment.
Fig. 2 shows an enlarged view of the apparatus of Fig. 1 during an inactive state of an actuator.
Fig. 3 shows an enlarged view of the apparatus of Fig. 1 during an active state of an actuator.
Fig. 4 shows an exploded view of a device of the pilot valve of Fig. 1.

### DETAILED DESCRIPTION

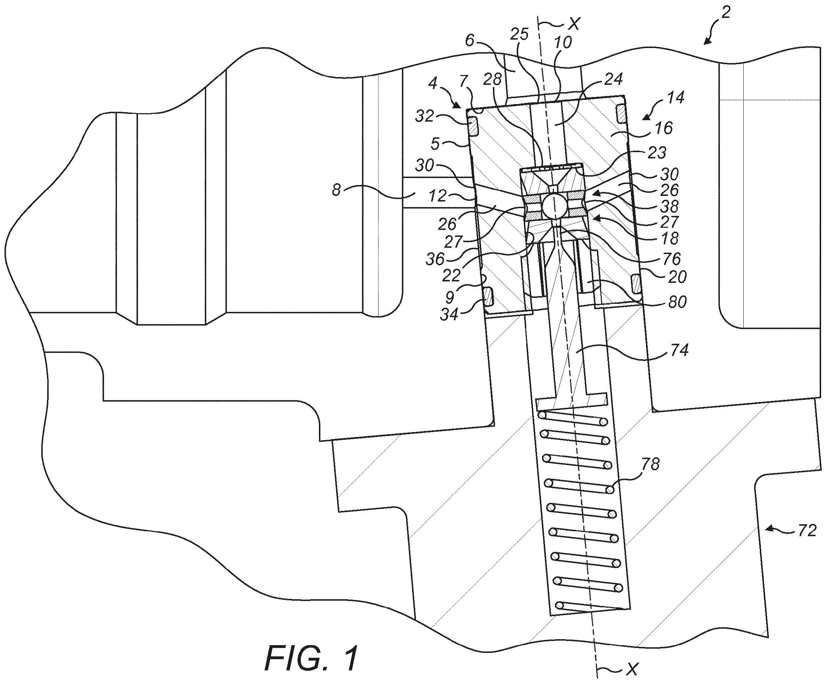

Fig 1. shows a pilot valve 2 comprising a chamber 4, a valve inlet passage 6 and a valve outlet passage 8. The valve inlet passage 6 is connected to the chamber 4 at a valve inlet 10, and the valve outlet passage 8 is connected to the chamber 4 at a valve outlet 12.

The chamber 4 is substantially cylindrical and defines a longitudinal axis X. The valve inlet 10 is located within a radial surface 7 of the chamber 4 and is coincident with the longitudinal axis X. The valve outlet 12 is located within a surface 9 of the chamber 4 that extends circumferentially around the axis X.

The valve inlet passage 6 is connected to a source of pressurised fluid (e.g., a high pressure port; not shown) and communicates the pressurised fluid to the chamber 4 via the valve inlet 10. The valve outlet passage 8 communicates the pressurised fluid from the chamber 4 via valve outlet 12 to actuate a hydraulic downstream component (e.g., an actuator spool; not shown). As described further below, the pilot valve 2 functions to limit and control the flow of fluid through the chamber 4 in order to control hydraulic actuation of the downstream component.

The pilot valve 2 comprises a device 14 disposed within the chamber 4. The device 14 may be referred to as a gland, and provides features and components to control flow of hydraulic fluid into and out of the chamber 4. The device 14 is generally formed separately from the pilot valve 2 and is installed by insertion into the chamber 4.

The device has a longitudinal axis, which axis is coaxial with the main, longitudinal axis X of the chamber 4 when the device 14 is installed in the chamber 4. The device 14 comprises a housing 16 having an internal cavity 18. The housing 16 has an exterior surface 20, and an interior surface 22 extending circumferentially around the axis X which partially defines the internal cavity 18. A radially extending surface 23 is located at an end of the interior surface 22 and also partially defines the internal cavity 18.

The housing 16 further comprises at least one inlet passage 24 that extends through the housing 16 from an inlet 25 at the exterior surface 20 to an outlet 28 at the radially extending surface 23 so as to provide fluid communication of hydraulic fluid from the source into the internal cavity 18 via the valve inlet passage 6.

The housing 16 further comprises a plurality of outlet passages 26 that extend through the housing from respective inlets 27 within the interior surface 22 to respective outlets 30 within the exterior surface 20, providing fluid communication of hydraulic fluid out of the internal cavity 18. The inlet 24 extends axially (e.g., is coaxial) with respect to the axis X, and the outlets 30 extend radially and are spaced circumferentially around the axis X.

In the embodiment shown, there is a single inlet passage 24 and two outlet passages 26. In other embodiments, there could be a plurality of inlet passages 24; additionally or alternatively, there could be a single outlet passage 26 or more than two outlet passages 26.

In the embodiment shown, the housing 16 has a shape corresponding to that of the chamber 4, i.e., generally cylindrical. That is, when the device 14 is installed in the chamber 4, the exterior surface 20 of the housing 16 is substantially in contact with a circumferentially extending chamber wall 5 partially defining the chamber 4. As can be seen in Fig. 1, an annular channel 36 extends around the exterior surface 20 of the housing 16. The annular channel 36 is in fluid communication with the outlet passages 26 of the device 14 and the valve outlet passage 8. The annular channel 36 is provided so that fluid exiting the circumferentially spaced outlet passages 26 is able to flow around the device 14 and exit the internal cavity 18 via the valve outlet passage 8.

In the embodiment shown, the device 14 forms a generally cylindrical shape. In addition, the device 14 has a generally constant cross-section in the direction of axis X (although this may deviate very slightly due to the annular channel 36). It has been found that a device having a generally cylindrical shape and/or generally constant cross-section is more reliable and robust. For example, the device 14 is less likely to deform during installation into the chamber 4. Accordingly, a cylindrical shape has been found to minimise the potential for damage during installation and to improve the reliability and robustness of the device 14.

The device 14 comprises first and second seals 32, 34 disposed on the exterior surface 20 of the housing 16 at opposed axial ends. In the embodiment shown, the first seal 32 is an O-ring seal; in other embodiments, other suitable seals might be used. The seals 32, 34 are configured to prevent fluid from leaking from the annular channel 36 in an axial direction, to ensure that the fluid within the annular channel 36 passes through the valve outlet passage 8 as described herein.

The first seal 32 is located circumferentially around the inlet 24 and axis X. The first seal 32 contacts the circumferentially extending chamber wall 5 at a location axially between the valve inlet 8 and the radially extending surface 7 with respect to the axis X. The first seal 32 provides sealing contact between the exterior surface 20 of the device 14 and the chamber wall 5, preventing axial fluid flow around the exterior of the device 14 past the first seal 32.

The arrangement of the first seal 32 is such that fluid entering the chamber 4 from the valve inlet 8 is substantially prevented from flowing around the device 14, and is instead communicated from the outlet passages 26 of the device 14 to the valve outlet passage 8.

Arranging a first seal 32 at the described location of the device 14 has been shown to assist in reducing the potential for foreign object debris (FOD) damage to the device 14 and to the pilot valve 2.

As discussed above the second seal 34 is located at an opposed axial end of the device 14 to the first seal 32 (with respect to axis X). The outlets 30 of the outlet passages 26 of the device 14 are arranged axially between the first seal 32 and the second seal 34. The valve outlet passage 8 is arranged axially between the first seal 32 and the second seal 34.

The second seal 34 substantially ensures that fluid leaves the device 14 through outlets 3 via the valve outlet passage 8. This can assist in preventing leakage of fluid from the chamber 4, for example.

As discussed above, the housing 16 comprises the annular channel 36, which is located axially between the first seal 32 and the second seal 34 with respect to axis X. The annular channel 36 comprises an area of reduced radius to create a space between the exterior surface 20 and the chamber wall 5 for the passage of fluid circumferentially around the device 14. The outlets 30 of the outlet passages 26 of the device 14 are located on the exterior surface 20 of the device 14 within the annular channel 36 so as to fluidly communicate with the annular channel 36.

The annular channel 36 allows fluid flow from the outlets 30 of the outlet passages 26 to flow annularly around the device 14 in order to provide fluid communication between outlets 30 and an inlet 12 of the valve outlet passage 8. The annular channel 36 thereby helps to improve the flow of fluid between the internal cavity 18 and the valve outlet passage 8.

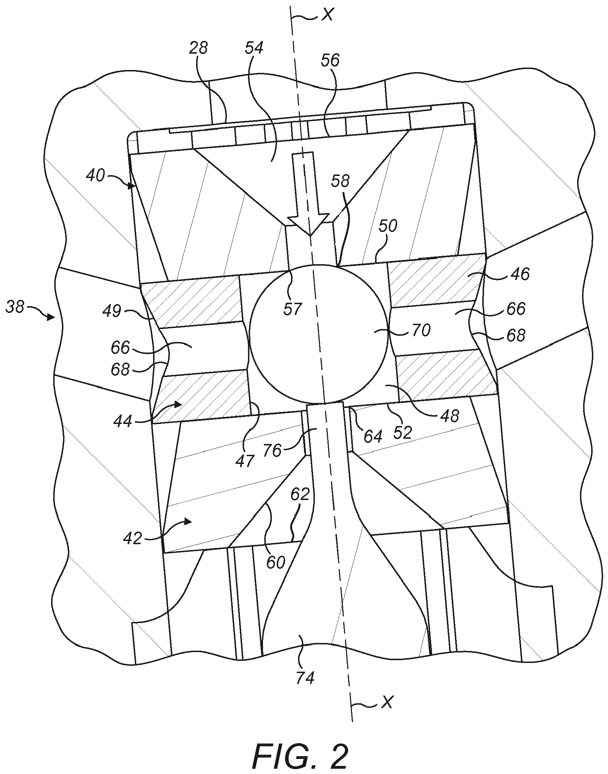

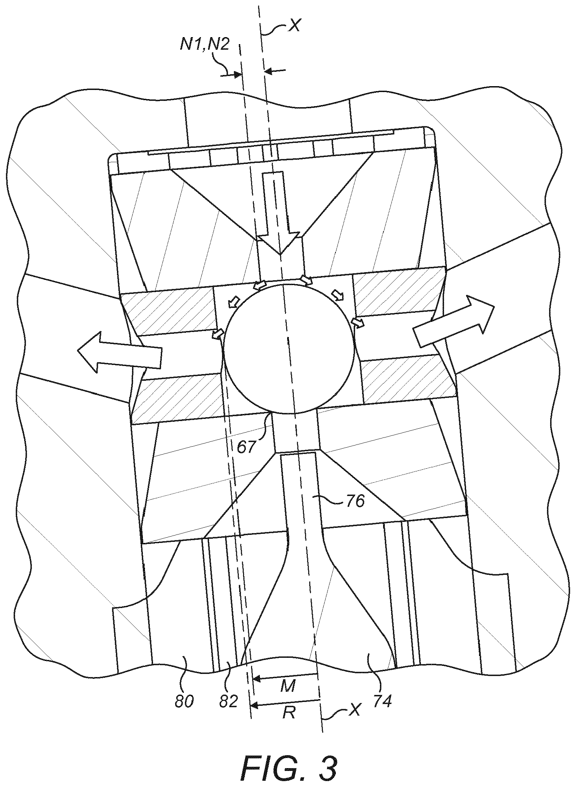

Referring now to Figs. 2 and 3, the device 14 comprises an apparatus 38 configured to control the flow of fluid through the internal cavity 18 in the form of a ball-and-seat valve arrangement. This apparatus 38 is disposed within the internal cavity 18 for controlling fluid flow therethrough, and thereby controlling flow through the chamber 4 of the pilot valve 2.

The apparatus 38 comprises first and second seats 40, 42, axially separated by a guide 44 (hereinafter referred to respectively as a "first ball seat", a "second ballseat" and a "ball guide", although it should be noted that the use of a ball is not essential to the broadest aspects of the present disclosure). The ball guide 44 comprises a guide housing 46 and a ball cavity 48 extending fully through the guide housing 46 in an axial direction from a first guide opening 50 to a second guide opening 52.

The ball seats 40, 42 comprise respective first and second seat passages 54, 60, extending fully through the respective ball seats 40, 42 in an axial direction. The first seat passage 54 extends from a fluid inlet 56 to a fluid outlet 58. The fluid inlet 56 interfaces with the fluid outlet 28 of the inlet passage 24 of the device 14, and the fluid outlet 58 interfaces with the first guide opening 50 of the ball cavity 48. The second seat passage 60 extends from a first opening 62 to a second opening 64.

The fluid inlet 56 of the first seat 40 is substantially aligned (i.e., has a common axis) with the inlet passage 24 of the device 14, so as to permit fluid communication therewith. The fluid outlet 58 of the first seat 40 is substantially aligned (i.e., has a common axis) with the first guide opening 50 of the ball cavity 48 so as to permit fluid communication therewith. The first seat 40 thereby permits fluid to communicate from the inlet passage 24 of the device 14 to the ball cavity 48 through the first seat passage 54.

In accordance with the disclosure the ball guide 44 is a substantially annular member comprising an inner circumferential surface 47 and a circumferential outer surface 49, wherein a body 46 of the ball guide 44 extends between the inner surface 47 and the outer surface 49. A plurality of fluid passages 66 extend through the body 46, which provide fluid communication between the ball cavity 48 and the outlet passages 26 of the device 14. In the embodiment shown, there are two outlet passages 66. In other embodiments, there may be one or more than two outlet passages 66. Respective outlets 68 of the outlet passages 66 are configured to align with and interface respective ones of the outlet passages 26, to allow fluid flow from the ball cavity 48 into the outlet passages 26.

The above-described apparatus 38 (i.e., the ball-and-seat valve arrangement) receives fluid from the inlet 24 of the device 14 into the ball cavity 48 via the first seat passage 54 of the first ball seat 40, and outputs fluid via the outlet passages 66 to the outlet passages 26 of the device 14.

The apparatus 38 further comprises a movable blocking member 70, which in the illustrated embodiment is a ball (although other types of member could be used, depending on the application at hand. The ball 70 sits in the ball cavity 48 of the ball guide 44. The ball cavity 48 is generally cylindrical from the first guide opening 50 to the second guide opening 52, having a constant radius R sized to be slightly larger than a radius M of the ball 70 (see Fig. 3). In refinements, the radius R of the second guide opening 52 may be 2%, 4% or 7% larger than the radius M of the ball 70.

As previously described, the fluid outlet 58 of the first seat 40 is substantially aligned with the first guide opening 50 of the ball cavity 48. Similarly, the second opening 64 of the second seat 42 is similarly aligned with the second guide opening 52 at the opposite axial end of the ball cavity 48. The fluid outlet 58 and the second opening 64 of the first and second seats 40, 42 are each sized to have respective radii N1 and N2, which are each less than the radius M of the ball (Fig. 3). The radii N1 and N2 are shown as equal in Fig. 3, although this is not an essential feature. As such, the first and second ball seats 40, 42 axially constrain the ball 70 to moving within the ball cavity 48.

The ball 70 is able to move between a first position as shown in Fig. 2, where the ball 70 contacts a rim 57 of the first seat 40 defining the fluid outlet 58 of the first seat 40, to a second position as shown in Fig. 3, where the ball 70 moves away from the rim 57 and contacts a rim 67 of the second seat 42 defining the second opening 64 of the second seat 42.

As the radius N1 of the fluid outlet 58 of the first seat 40 is smaller than the radius M of the ball 70, when the ball 70 is in the first position it substantially blocks and/or seals the fluid outlet 58 of the first seat 40 to prevent fluid from flowing through the first seat passage 54 and through the first seat 40.

Similarly, at the second position, the ball 70 contacts the rim 67 and substantially blocks and/or seals the second opening 64 of the second seat 42 to prevent fluid from flowing through the second seat passage 60 and through the second seat 42. At the second position, the ball 70 moves away from the rim 57 of the first seat 40 and does not block the fluid outlet 58 of the first seat 40, such that fluid is able to flow through the apparatus via the first seat passage 54, as shown in Fig. 3.

Referring back to Fig. 1, the pilot valve 2 further comprises a solenoid 72 with a solenoid needle 74 having a needle tip 76. The needle 74 extends into the housing 16 from the exterior surface 20 through an open end 75 of the internal cavity 18. The solenoid 72 is configured to move the needle 74 in an axial direction (i.e., along the axis X) as described in more detail below.

As shown in Fig. 2, the needle 74 is arranged at an axially opposed side of the second seat 42 to the ball guide 44. The needle tip 76 is sized to fit into the second seat passage 60, and to extend through the first opening 62 of the second seat 42 and further extend through the second opening 64 of the second seat 42. The needle tip 76 is sized to contact the ball 70 within the ball guide 44.

Use of a ball may be advantageous since the shape can perfectly close a circular opening (e.g., first guide opening 50), even if the solenoid needle 74 (discussed below) is bent or damaged. In addition, the force transferred by the solenoid needle 74 does not have to be parallel to the axis X.

In the embodiment shown, the solenoid further comprises a spring 78 urging the needle 74 in an axial direction (i.e., along the axis X) towards the second seat 42. When the solenoid is not activated, the needle 74 remains in the first position as shown in Fig. 2, in which the needle tip 76 urges the ball 70 into the first position against the rim 57 of the fluid outlet 58 of the first seat 40, thereby preventing fluid flow through the first seat passage 54 as discussed above.

Upon activation of the solenoid 72, the solenoid 72 is energized, and the needle 74 is actuated axially away from the second seat 42, against the biasing of the spring 78. In other words, upon activation the solenoid 72 is configured to overcome the force exerted by the spring 78 and move the needle 74 in a direction away from the second seat 42. The pressure from fluid located within and flowing through the first seat passage 54 forces the ball 70 towards the second opening 64 of the second seat 42, into its second position, as shown in Fig. 3. In this position fluid is able to flow through the first seat passage 54, into the ball cavity 48, out of the outlet passages 66 and into the outlet passages 26 of the device 14. In this manner, the solenoid 72 is configured to operate the pilot valve 2 and control the flow of fluid through the device 14.

As discussed above, when the ball 70 is in the second position, the ball 70 largely blocks the second opening 64 of the second seat 42 to prevent fluid flow therethrough. Hence, the action of fluid entering the ball cavity 48 also prevents undesirable extraneous fluid flow out of the ball cavity 48 via the second seat passage 60 when the solenoid 72 is energized.

As shown in Fig. 1, the device 14 may further comprise a retainer 80. The retainer 80 is positioned in the internal cavity 18 adjacent to the second seat 42 on an axially opposed side of the second seat 42 to the ball guide 44. The retainer 80 and is configured to press fit into the internal cavity 18. The retainer 80 is further configured to retain the second seat 42 in contact with the ball guide 44. The ball guide 44 is thereby also retained in contact with the first seat 40. The retainer 80 has a retainer passage 82 through which the needle 74 extends (see Fig. 3). The retainer passage 82 may be sized to constrain the needle in a radial direction, only allowing axial movement thereof.

The device 14 may further comprise a screen filter 84, positioned in the internal cavity 18 axially between the first seat 40 and the inlet passage 24. The screen filter 14 may comprise a number of apertures and is configured to screen the fluid flowing into the device 14 for foreign object debris ("FOD").

The device 14 may be constructed from metallic materials. For instance, the housing 16 may be formed of steel or steel alloys, while the ball seats 40, 42, the ball 70 and the retainer 80 may be formed of aluminium or aluminium alloys.

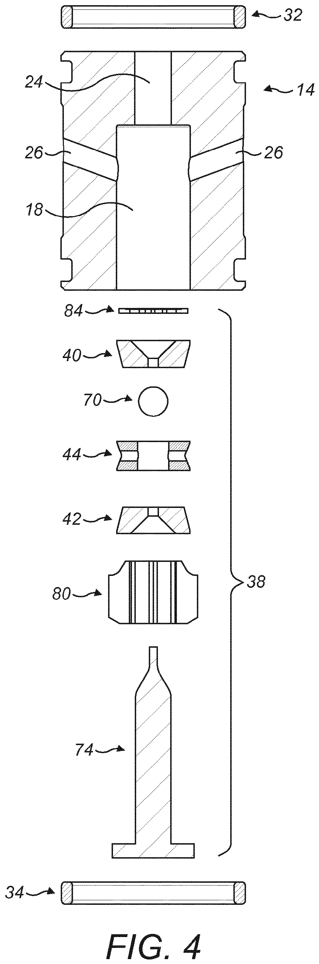

Fig. 4 shows an exploded view of the apparatus 38 of the device 14, including the seals 32, 34 located at either axial end of the device 14, wherein the optional screen filter 84 may be inserted first into the internal cavity 18. The first seat 40, followed by the movable blocking member 70 (e.g., ball) and the guide 44 (e.g., ball guide) and may then be inserted into the internal cavity 18. In order to enclose the movable blocking member 70 within the guide 44, the second seat 42 is inserted and then the retainer 80 is pressed into the internal cavity 18, which pushes the second seat 42 against the guide 44 and first seat 40 as aforesaid. The needle 74 of the solenoid 72 is then inserted into the retainer 80 and second seat 42.

The pilot valve 2 described herein may provide hydraulic control of an actuator. The actuator may be part of a ram air turbine ("RAT") of an aircraft, such as that disclosed in US 2017/0261017 A1.

Although the present disclosure has been described with reference to various embodiments, it will be understood by those skilled in the art that various changes in form and detail may be made without departing from the scope of the invention as set forth in the accompanying claims.

## Claims

1. A device (14) for selectively controlling the flow of hydraulic fluid through the pilot valve , the device (14) comprising a longitudinal axis (A) and comprising:
a housing (16) comprising an exterior surface (20);
an internal cavity (18) defined at least partially by an interior surface (22) of the housing (16);
at least one inlet passage (24) extending through the housing (16) from the exterior surface (20) to the internal cavity (18); and
at least one outlet passage (26) extending through the housing (16) from the internal cavity (18) to the exterior surface (20);
a guide (44) disposed in the internal cavity (18) and defining a guide cavity (48) therein, wherein the guide (44) is provided as a substantially annular member having a body (46) extending between an inner circumferential surface (47) defining the guide cavity (48) and an outer circumferential surface (49), wherein the guide (44) comprises at least one fluid passage (66) extending through the body (46) from the inner circumferential surface (47) to the outer circumferential surface (49), the fluid passage(s) (66) providing fluid communication between the guide cavity (48) and the outlet passage(s) (26) of the device (14);
a first seat (40) disposed in the internal cavity (18) axially between the inlet passage (24) and the ball guide (44) and defining a first seat passage (54) therethrough to fluidly connect the inlet passage (24) with the guide cavity (48);
a second seat (42) disposed in the internal cavity (18) such that the guide (44) is arranged axially between the first seat (40) and the second seat (42), the second seat (42) defining a second seat passage (60) therethrough;
a movable blocking member (70) disposed in the guide cavity (48) of the guide (44) and axially moveable therein between a first position and a second position, wherein in the first position the movable blocking member (70) substantially blocks and/or seals the first seat passage (54) to prevent fluid from flowing through the first seat passage (54) and into the guide cavity (48) of the guide (44), and wherein in the second position the movable blocking member (70) permits fluid to flow out of the device (14) via the guide cavity (48), the fluid passage(s) (66) of the guide (44) and the outlet passage(s) (26) of the device (14); and
an actuator (72) configured to control the position of the movable blocking member (70).

2. The device (14) of claim 1, wherein:
the movable blocking member (70) is a ball;
the first seat passage (54) comprises a fluid outlet (58) with a radius (N1) at a side adjoining the guide cavity (48);
the second seat passage (60) comprises an opening (64) with a radius (N2) at a side adjoining the guide cavity (48); and
the ball has a radius M greater than the radius (N1) of the fluid outlet (58) and the radius (N2) of the opening (64).

3. The device (14) of claim 2, wherein the guide cavity (48) is cylindrical and has a substantially constant cross-section with a radius R.

4. The device (14) of claim 1, 2 or 3, wherein actuator (72) comprises a solenoid (72).

5. The device (14) of any preceding claim, further comprising a retainer (80) disposed in the internal cavity (18) adjoining the second seat (42) on an axially opposed side to the guide (44), wherein the retainer (80) is press-fit in the internal cavity (18).

6. The device (14) of any preceding claim, wherein the at least one outlet passage (28) comprises a plurality of outlet passages.

7. The device (14) of any preceding claim, wherein the housing (16) has a substantially constant cross-section along the axis X, optionally wherein the device (14) is substantially cylindrical.

8. The device of any preceding claim, further comprising a screen filter (84), positioned in the internal cavity (18), wherein the screen filter (84) is positioned between the first seat (40) and the inlet passage (24) of the device (14).

9. The device (14) of any preceding claim, wherein the housing (16) is formed of steel or a steel alloy.

10. A pilot valve (2) comprising:
a chamber (4) defined by a chamber wall (5);
a valve inlet (10) formed in the chamber wall (5);
a valve outlet (12) formed in the chamber wall (5);
a device (14) as claimed in any preceding claim disposed in the chamber (4), the device configured to selectively control the flow of hydraulic fluid through the pilot valve.

11. The pilot valve (2) of claim 10, further comprising a first seal (32) sealingly engaged with the exterior surface (20) and the chamber wall (5) at a position axially between the valve inlet (10) and the valve outlet (12).

12. The pilot valve (2) of claim 11, further comprising a second seal (34) sealingly engaged with the exterior surface (20) and the chamber wall (5) at an axially opposed side of the valve outlet (12) to the first seal (32).

13. The pilot valve (2) of claim 12, wherein the device (14) further comprises an annular cavity (36) formed in the exterior surface (20) and extending circumferentially around the device (14) axially between the first seal (32) and the second seal (34).

14. A ram air turbine comprising:
an actuator; and
the pilot valve (2) of any of claims 10 to 13, configured to control the actuator, wherein the device (14) is configured to selectively provide hydraulic fluid from a source of hydraulic fluid to the actuator.

15. A method of repairing a pilot valve (2) comprising:
removing an existing device configured to selectively control the flow of hydraulic fluid through the pilot valve; and
installing a device (14) as claimed in any of claims 1 to 9 in the pilot valve (2).
